# EUROPÄISCHE PATENTSCHRIFT

(11) **EP 2 689 915 B1**
(45) Veröffentlichungstag und Bekanntmachung des Hinweises auf die Patenterteilung: **11.01.2017**
(21) Anmeldenummer: 12005405.1
(22) Anmeldetag: 25.07.2012
(51) Int. Cl.: B29C 45/16, F02M 35/10, F16L 11/08, B29C 45/14, B29C 61/02, B29D 23/00, B29L 23/00

(54) **Verfahren zum Herstellen eines Druckschlauchs, sowie danach hergestellter Druckschlauch**
Method for producing a pressure hose, and pressure hose so produced
Procédé de fabrication d'un tuyau flexible sous pression, et tuyau flexible ainsi produit

(43) Veröffentlichungstag der Anmeldung: 29.01.2014
(73) Patentinhaber: Etimex Technical Components GmbH, 89616 Rottenacker (DE)
(72) Erfinder: Striebel, Ulrich, 89616 Rottenacker (DE)
(74) Vertreter: Rothkopf, Ferdinand

(56) Entgegenhaltungen:
- EP-A2- 1 065 039
- DE-A1-102005 033 271
- DE-A1-102005 046 367
- DE-A1-102008 059 795
- US-A- 1 361 206
- US-A1- 2004 256 016
- US-B1- 7 264 021

## Beschreibung

### Hintergrund der Erfindung

Die Erfindung betrifft ein Verfahren zum Herstellen eines Druckschlauchs.

Druckschläuche kommen insbesondere im Bereich der Kraftfahrzeuge beispielsweise an Turboladern zum Einsatz. Aber besonders auch im Bereich von Reinigungsmaschinen für Haushalt und Gewerbe, wie Spülmaschinen und Waschmaschinen, werden Druckschläuche verwendet. Die Herstellung von derartigen Druckschläuchen ist vergleichsweise aufwendig. Bei bekannten Druckschläuchen wird zunächst eine Innenschicht bzw. ein Innenschlauch extrudiert, der nachfolgend mit einem Gewebestreifen umwickelt wird. In einem zweiten Extrusionsschritt wird auf den derart umwickelten Innenschlauch eine Außenschicht extrudiert. Danach wird der extrudierte Gesamtschlauch in Stücke geschnitten, die einzeln auf einen Kern gezogen werden. Auf dem Kern wird der jeweilige Schlauchabschnitt getempert und erhält dadurch seine Endform.

Aus der von der Anmelderin stammenden DE 10 2008 059 795 A1 ist ein Verfahren zum Herstellen eines Druckschlauchs bekannt, das die Schritte Spritzgießen eines rohrförmigen ersten Schlauchelements, Aufziehen eines Gewebeschlauchs außen auf das erste Schlauchelement sowie Spritzgießen eines rohrförmigen zweiten Schlauchelements um das erste Schlauchelement und den darüber gezogenen Gewebeschlauch umfasst.

Aus DE 10 2005 033 271 A1 ist ein hochdruckbeständiger schwingungsdämpfender Schlauch bekannt, der eine Innenflächenschicht, eine Verstärkungsschicht und eine Außenflächenschicht aufweist. Dabei weist die Verstärkungsschicht eine hohe Flecht- oder Wickeldichte der Verstärkungsanteile von mindestens 50% auf.

### Zugrundeliegende Aufgabe

Der Erfindung liegt die Aufgabe zugrunde, ein Verfahren zum Herstellen eines Druckschlauches zu schaffen, welches insbesondere im Vergleich zur bisherigen Vorgehensweise nochmals kostengünstiger ist und zu einem qualitativ hochwertigeren Druckschlauch führt.

### Erfindungsgemäße Lösung

Diese Aufgabe ist erfindungsgemäß mit einem Verfahren gemäß Anspruch 1 und einem Druckschlauch gemäß Anspruch 10 gelöst. Vorteilhafte Weiterbildungen der erfindungsgemäßen Lösung sind in den abhängigen Ansprüchen definiert.

Erfindungsgemäß ist ein Verfahren zum Herstellen eines Druckschlauchs mit folgenden Schritten geschaffen: Spritzgießen eines rohrförmigen ersten Schlauchelements, Aufziehen eines Gewebeschlauchs außen auf das erste Schlauchelement, Aufschrumpfen des Gewebeschlauchs auf das erste Schlauchelement sowie Spritzgießen eines rohrförmigen zweiten Schlauchelements um das erste Schlauchelement und den darüber gezogenen Gewebeschlauch.

Der erfindungsgemäß als Schrumpfschlauch gestaltete Gewebeschlauch, der als Verstärkungslage um ein erstes spritzgegossenes Schlauchelement gelegt und dann geschrumpft wird, bis er vollflächig an der Außenseite des ersten Schlauchelements zum Anliegen kommt, führt zu einer besonders genau definierten Anordnung des Gewebeschlauches innerhalb des hergestellten Druckschlauchs. Mit der derart definierten Positionierung des Gewebeschlauchs wird die Präzision und Maßhaltigkeit insbesondere des ebenfalls spritzgegossenen, zweiten Schlauchelements verbessert. Damit ergibt sich insgesamt ein hochwertiger Druckschlauch, der ferner auch höheren Belastungen standhält.

Bei dem erfindungsgemäßen Schrumpfschlauch sind vorzugsweise die zugehörigen Kettfäden und Schussfäden mit unterschiedlichen Materialzusammensetzungen gestaltet. So weist der Schrumpfschlauch besonders bevorzugt in seiner Längs- und Umfangsrichtung unterschiedliches Schrumpfverhalten auf. Die Kettfäden sind vorzugsweise stärker schrumpfbar als die Schussfäden. Besonders bevorzugt sind die Kettfäden mindestens 25% schrumpfbar und/oder aus reinem Thermoplast, insbesondere Polyester. Die Schussfäden sind bevorzugt höchstens 15% schrumpfbar und/oder weisen einen schrumpffähigen sowie einen nicht schrumpffähigen Bestandteil auf. Besonders bevorzugt sind die Schussfäden aus Polyphenylensulfid-Fasern und Metaaramid gestaltet, wobei diese Materialien vorzugsweise miteinander verzwirnt sind. Die Schussfäden sind vorzugsweise als Kreuzzwirn gestaltet. Der schrumpffähige Bestandteil ist vorteilhaft von gerade verlaufenden Filamenten gebildet.

Bei einer vorteilhaften Weiterbildung des erfindungsgemäßen Verfahrens erfolgt das Aufschrumpfen des Gewebeschlauchs nachdem der Gewebeschlauch vollständig außen auf das erste Schlauchelement aufgezogen worden ist.

Zum Aufschrumpfen wird der Gewebeschlauch über das erste Schlauchelement geschoben und nachfolgend insbesondere mit Heizluft erwärmt. Durch das derartige Erwärmen schrumpfen die oben genannten Fasern des Schrumpfschlauchs und bringen diesen damit zum Anliegen an der Außenseite des ersten Schlauchelements.

Beim Spritzgießen des ersten Schlauchelements wird dieses vorzugsweise an zumindest einem seiner Enden länger hergestellt, als nachfolgend das zweite Schlauchelement, so dass mit dem Spritzgießen des zweiten Schlauchelements ein nachfolgend überstehender Schlauchabschnitt des ersten Schlauchelements entsteht.

An dem derart hergestellten überstehenden Schlauchabschnitt des ersten Schlauchelements kann dieses gefasst und bei der nachfolgenden Bearbeitung gehalten werden. Auf diese Weise kann vorteilhaft insbesondere nachfolgend der Gewebeschlauch über das erste Schlauchelement geführt und dann geschrumpft werden. Ferner kann an dem überstehenden Schlauchabschnitt das erste Schlauchelement und/oder der darüber angeordnete Gewebeschlauch beim Spritzgießen des zweiten Schlauchelements gehalten werden.

Entsprechend wird bei einer vorteilhaften Weiterbildung des erfindungsgemäßen Verfahrens beim Spritzgießen des zweiten Schlauchelements der überstehende Schlauchabschnitt des ersten Schlauchelements ortsfest gehalten.

Besonders bevorzugt wird beim Spritzgießen des zweiten Schlauchelements der überstehende Schlauchabschnitt des ersten Schlauchelements geklemmt.

Das Klemmen erfolgt besonders bevorzugt zusammen mit dem dazu ebenfalls am Schlauchabschnitt zumindest teilweise überstehenden Schrumpfschlauch.

Beim Aufziehen des Gewebeschlauchs wird entsprechend der Gewebeschlauch vorteilhaft so positioniert, dass er sich auch zumindest teilweise über den überstehenden Schlauchabschnitt des ersten Schlauchelements erstreckt.

Nach dem Herstellen des erfindungsgemäßen Druckschlauchs wird der überstehende Schlauchabschnitt des ersten Schlauchelements vorzugsweise vor einem Verwenden des Druckschlauchs entfernt. Dazu kann der überstehende Schlauchabschnitt abgeschnitten oder vom Druckschlauch heruntergestanzt werden.

Für das Spritzgießen des ersten Schlauchelements wird vorzugsweise ein Kunststoff, d.h. ein organisches Polymer aus einer der Gruppen Thermoplaste, Duroplaste und Elastomere, mit einer Härte gewählt, die größer ist als die Härte des für das Spritzgießen des zweiten Schlauchelements gewählten Kunststoffs.

Mit der derartigen Wahl der Materialien des ersten und des zweiten Schlauchelements wird erreicht, dass das erste Schlauchelement zumindest geringfügig steifer ist als das zweite Schlauchelement. Mit der derartigen Gestaltung ist es einfacher das zweite Schlauchelement spritzzugießen, weil das erste Schlauchelement eine stabilere und steifere Grundstruktur für das nachfolgende zweite Spritzgießen bietet. Dennoch kann der derart hergestellte Druckschlauch ein hohes Maß an Flexibilität aufweisen, was im Hinblick auf die Montage eines solchen Druckschlauchs und dessen Verhalten bei Stoß, Vibration und Schwingung während des Betriebs vorteilhaft ist.

Für das Spritzgießen des ersten Schlauchelements wird bevorzugt ein Kunststoff mit einer Shore-A Härte gewählt, die mindestens um mehr als 5, vorzugsweise um mehr als 10 größer ist als die Shore-A Härte des für das Spritzgießen des zweiten Schlauchelements gewählten Kunststoffs.

Als Kunststoffe für das Spritzgießen des ersten Schlauchelements werden vorzugsweise die folgenden Elastomere gewählt: CM, AEM, HT-AEM, FPM sowie ACM mit einem Füllstoffanteil (insbesondere Aramidfaser) von bis zu 20%. Die Shorehärte des gewählten Kunststoffs des ersten Schlauchelements beträgt vorzugsweise 50 Shore A bis 90 Shore A. Der Kunststoff wird vorzugsweise so gewählt, dass er einer Temperaturbelastung von -40°C bis +230°C standhält. Das zweite Schlauchelement ist vorzugsweise aus CM, AEM, FPM oder ACM mit einem Füllstoffanteil von bis zu 5%. Die Shorehärte des Kunststoffs des zweiten Schlauchelements beträgt vorzugsweise zwischen 40 Shore A und 80 Shore A. Bevorzugt werden sehr leichtfließende Typen von Kunststoff verwendet. Auch diese Kunststoffe halten vorzugsweise einer Temperaturen zwischen -40°C und +230°C stand.

Gemäß der Erfindung ist ferner ein Druckschlauch vorgesehen, der mit dem oben genannten erfindungsgemäßen Verfahren hergestellt worden ist.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:

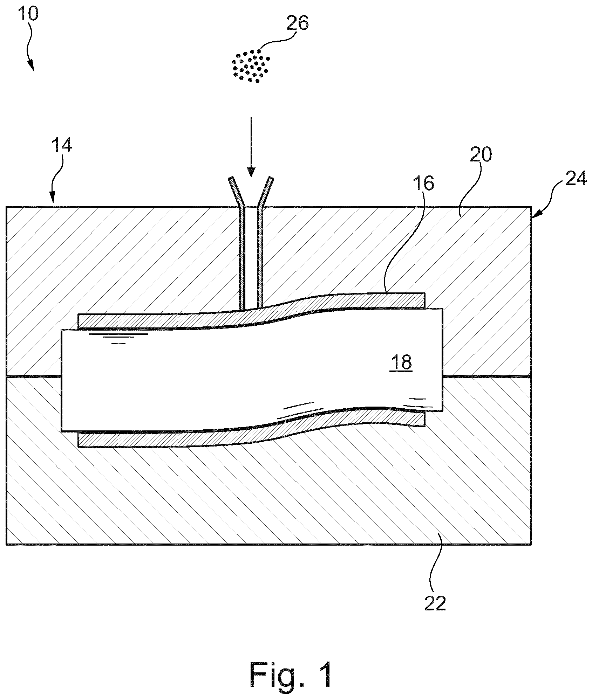

- Fig. 1: eine Veranschaulichung eines ersten Schritts des erfindungsgemäßen Verfahrens,
- Fig. 2: eine Veranschaulichung eines zweiten Schritts des erfindungsgemäßen Verfahrens,
- Fig. 3: eine Veranschaulichung eines dritten Schritts des erfindungsgemäßen Verfahrens,

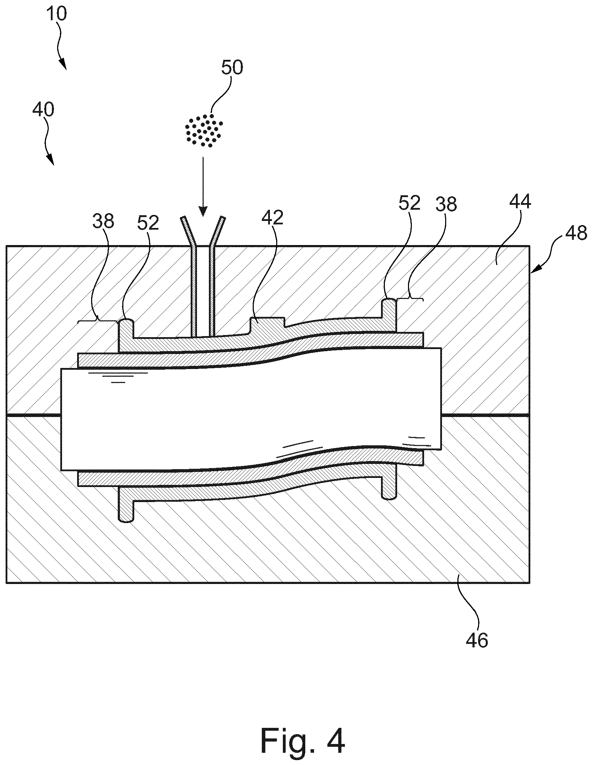

- Fig. 4: eine Veranschaulichung eines vierten Schritts des erfindungsgemäßen Verfahrens und

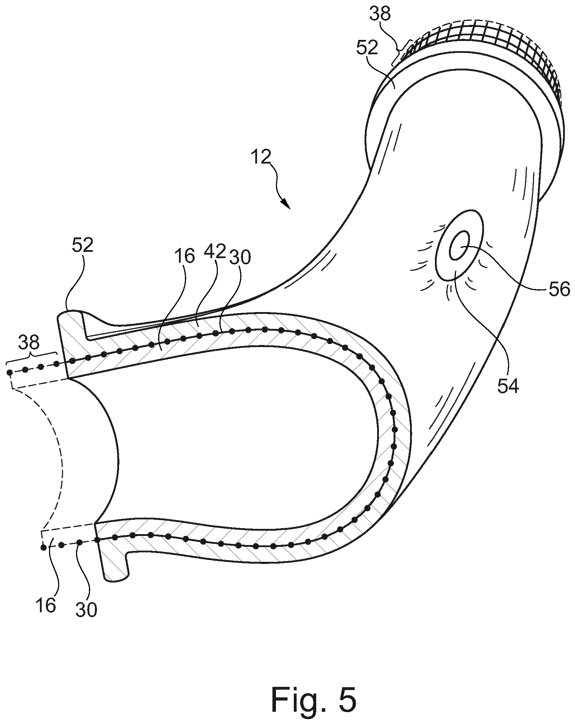

- Fig. 5: eine teilweise geschnittene, perspektivische Ansicht eines Druckschlauchs, der mit einem Verfahren gemäß den Fig. 1 bis 4 hergestellt worden ist.

### Detaillierte Beschreibung des Ausführungsbeispiels

In den Figuren ist ein Verfahren 10 zum Herstellen eines Druckschlauchs 12 veranschaulicht, welches als ersten wesentlichen Schritt 14 ein Spritzgießen eines rohrförmigen ersten Schlauchelements 16 auf einem Einlegekern 18 umfasst. Der Einlegekern 18 befindet sich dabei in einer aus zwei Hälften 20 und 22 gebildeten ersten Spritzgießform 24, in die ein erster Kunststoff 26 mit einer Shorehärte von 70 Shore A, vorliegend ACM mit 15% Aramidfaser, unter hohem Druck und hoher Temperatur eingespritzt wird.

Nachfolgend wird das erste Schlauchelement 16 aus der ersten Spritzgießform 24 entnommen und in einem Schritt 28 ein als Schrumpfschlauch gestalteter Gewebeschlauch 30 außen auf das erste Schlauchelement 16 aufgezogen.

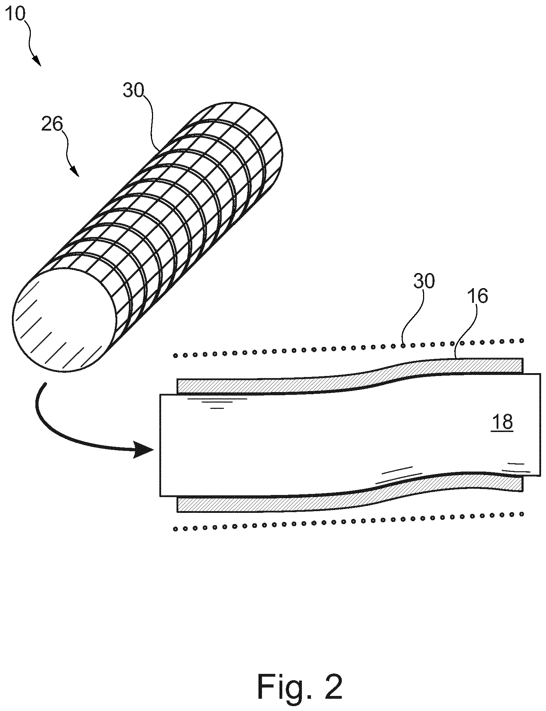

Der Gewebeschlauch 30 ist dabei im Durchmesser derart groß bemessen, dass er über die gesamte Länge des ersten Schlauchelements 16 hinweg auf dieses locker aufgeschoben werden kann. Dies ist in Fig. 2 mit einem Abstand zwischen der Außenseite des ersten Schlauchelements 16 und dem Gewebeschlauch 30 veranschaulicht.

Bei dem Gewebeschlauch sind die zugehörigen Kettfäden und Schussfäden mit unterschiedlichen Materialzusammensetzungen gestaltet. Die Kettfäden sind 40% schrumpfbar und aus reinem Thermoplast, vorliegend Polyester, von gerade verlaufenden Filamenten gebildet. Die Schussfäden sind nur 10% schrumpfbar und weisen einen schrumpffähigen sowie einen nicht schrumpffähigen Bestandteil auf. Sie sind mit Polyphenylensulfid-Fasern und Metaaramid gestaltet, wobei diese Materialien miteinander verzwirnt sind. Die Schussfäden sind dabei als Kreuzzwirn gestaltet. Die Kettfäden sind daher stärker schrumpfbar als die Schussfäden. Auf diese Weise weist der als Schrumpfschlauch gestaltete Gewebeschlauch 30 in seiner Längsrichtung ein geringes Schrumpfverhalten auf und in seiner Umfangsrichtung ein starkes Schrumpfverhalten.

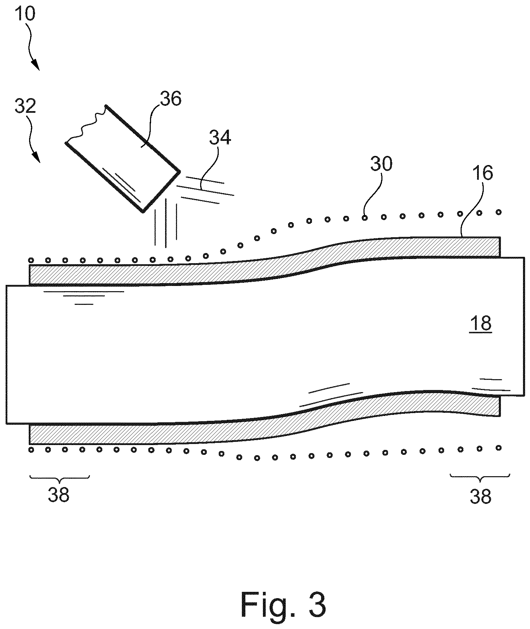

In Fig. 3 ist ein nachfolgender Schritt 32 des Aufschrumpfens des Gewebeschlauchs 30 auf die Außenfläche des ersten Schlauchelements 16 veranschaulicht. Dazu wird heiße Luft 34 mittels einer Blaseeinrichtung 36 auf die äußere Oberfläche des ersten Schlauchelements 16 und den sich darüber befindenden Gewebeschlauch 30 geblasen. Die schrumpffähigen Fäden des Gewebeschlauchs 30 verkürzen sich und dieser legt sich an die Außenfläche des ersten Schlauchelements 16 vollständig an.

Der Gewebeschlauch 30 ist dabei derart lang bemessen, dass er sich über die gesamte Längserstreckung des ersten Schlauchelements 16 erstreckt, insbesondere im Wesentlichen auch über dessen linken und rechten, äußeren Endbereich bzw. Schlauchabschnitt 38.

Das erste Schlauchelement 16 befindet sich beim Überziehen und Aufschrumpfen des Gewebeschlauchs 30 weiterhin auf dem Einlegekern 18, der zuvor lediglich aus der ersten Spritzgießform entnommen worden ist.

Der Gewebeschlauch 30 wird vor oder nach dem Aufschrumpfen an seinen beiden Enden derart beschnitten, dass er nicht oder nur geringfügig über die zugehörigen Enden des ersten Schlauchelements 16 hinausragt.

In einem nachfolgenden Schritt 40 wird ein rohrförmiges zweites Schlauchelement 42 um das erste Schlauchelement 16 und den darüber gezogenen und geschrumpften Gewebeschlauch 30 spritzgegossen. Der Einlegekern 18 befindet sich dazu zusammen mit dem ersten Schlauchelement 16 und dem aufgeschrumpften Gewebeschlauch 30 in einer wiederum aus zwei Hälften 44 und 46 gebildeten zweiten Spritzgießform 48.

Die beiden Hälften 44 und 46 der zweiten Spritzgießform 48 klemmen dabei die beiden oben genannten, äußeren Schlauchabschnitte 38 des ersten Schlauchelements 16 sowie den auch in diesen Schlauchabschnitten 38 aufgeschrumpften Gewebeschlauch 30. Auf diese Weise wird das erste Schlauchelement 16 sowie der Gewebeschlauch 30 in der zweiten Spritzgießform 48 mit hoher Maßgenauigkeit an seinen Schlauchabschnitten 38 in Position gehalten.

Beim zweiten Spritzgießen wird als zweiter Kunststoff 50 ACM mit einem Füllstoffanteil von 3% verwendet. Die Shorehärte dieses Kunststoffs beträgt ca. 50 Shore A. Der zweite Kunststoff 50 wird in die zweite Spritzgießform 48 eingespritzt, wobei bei diesem zweiten Spritzgießvorgang an dem Druckschlauch 12 zugleich zwei Endflansche 52 als Anschlusselemente ausgebildet werden. Ferner wird ein Kabelclip 54 als Anschlusselement mittig an der Wandung des Druckschlauchs 12 mit einem darin angeordneten metallischen Einlegeteil 56 ausgebildet.

Alternativ oder zusätzlich können bei einem nicht dargestellten Ausführungsbeispiel eines Druckschlauchs 12 auch ein oder mehrere Faltenbälge ausgebildet werden. Auch können abschnittsweise verschiedene Wandstärken aus verschiedenen Materialanteilen realisiert sein, um insbesondere die Beweglichkeit des Druckschlauchs bei gleichzeitiger Druckbeständigkeit zu optimieren. Besonders vorteilhaft können dabei auch Bereiche unterschiedlicher Wandstärken und/oder Materialien in Abhängigkeit von zu erfüllenden akustischen Anforderungen geformt werden.

In einem abschließenden Arbeitsgang wird der Druckschlauch 12 samt dem Einlegekern 18 aus der zweiten Spritzgießform 40 entnommen. Nachfolgend wird mittels eines Luft-Druckimpulses der Druckschlauch 12 von dem Einlegekern 18 entformt und dann die noch über das zweite Schlauchelement 42 überstehenden äußeren Schlauchabschnitte 38 des ersten Schlauchelements 16 mit dem sich darauf noch befindenden Abschnitten des Gewebeschlauchs 30 abgeschnitten.

### Bezugszeichenliste

- 10: Verfahren
- 12: Druckschlauch
- 14: Schritt Spritzgießen des ersten Schlauchelements
- 16: erstes Schlauchelement
- 18: Einlegekern
- 20: Hälfte
- 22: Hälfte
- 24: erste Spritzgießform
- 26: erster Kunststoff
- 28: Schritt Aufziehen des Gewebeschlauchs
- 30: Gewebeschlauch
- 32: Schritt Aufschrumpfen des Gewebeschlauchs
- 34: heiße Luft
- 36: Blaseeinrichtung
- 38: äußerer Schlauchabschnitt des ersten Schlauchelements
- 40: Schritt Spritzgießen des zweiten Schlauchelements
- 42: zweites Schlauchelement
- 44: Hälfte
- 46: Hälfte
- 48: zweite Spritzgießform
- 50: zweiter Kunststoff
- 52: Endflansch
- 54: Kabelclip
- 56: Einlegeteil

## Patentansprüche

1. Verfahren (10) zum Herstellen eines Druckschlauchs (12) mit den Schritten:
- Spritzgießen (14) eines rohrförmigen ersten Schlauchelements (16),
- Aufziehen (28) eines Gewebeschlauchs (30) außen auf das erste Schlauchelement (16),
- Aufschrumpfen (32) des Gewebeschlauchs (30) auf das erste Schlauchelement (16) sowie
- Spritzgießen (40) eines rohrförmigen zweiten Schlauchelements (42) um das erste Schlauchelement (16) und den darüber gezogenen Gewebeschlauch (30).

2. Verfahren nach Anspruch 1,
bei dem das Aufschrumpfen (32) des Gewebeschlauchs (30) erfolgt, nachdem der Gewebeschlauch (30) vollständig außen auf das erste Schlauchelement (16) aufgezogen worden ist.

3. Verfahren nach Anspruch 1 oder 2,
bei dem beim Spritzgießen (14) des ersten Schlauchelements (16) das erste Schlauchelements (16) an zumindest einem seiner Enden länger hergestellt wird, als nachfolgend das zweite Schlauchelement (42), so dass mit dem Spritzgießen (40) des zweiten Schlauchelements (42) ein nachfolgend überstehender Schlauchabschnitt (38) des ersten Schlauchelements (16) entsteht.

4. Verfahren nach Anspruch 3,
bei dem beim Spritzgießen (40) des zweiten Schlauchelements (42) der überstehende Schlauchabschnitt (38) des ersten Schlauchelements (16) ortsfest gehalten wird.

5. Verfahren nach einem der Ansprüche 1 bis 4,
bei dem beim Spritzgießen (40) des zweiten Schlauchelements (42) der überstehende Schlauchabschnitt (38) des ersten Schlauchelements (16) geklemmt wird.

6. Verfahren nach einem der Ansprüche 1 bis 5,
bei dem beim Aufziehen (28) des Gewebeschlauchs (30) der Gewebeschlauch (30) sich auch zumindest teilweise über den überstehenden Schlauchabschnitt (38) des ersten Schlauchelements (16) erstreckend aufgezogen wird.

7. Verfahren nach einem der Ansprüche 1 bis 6,
bei dem der überstehende Schlauchabschnitt (38) des ersten Schlauchelements (16) vor einem Verwenden des hergestellten Druckschlauchs (12) entfernt wird.

8. Verfahren nach einem der Ansprüche 1 bis 7,
bei dem für das Spritzgießen (14) des ersten Schlauchelements (16) ein Kunststoff (26) mit einer Härte gewählt wird, die größer ist als die Härte des für das Spritzgießen (40) des zweiten Schlauchelements (42) gewählten Kunststoffs (50).

9. Verfahren nach Anspruch 8,
bei dem für das Spritzgießen (14) des ersten Schlauchelements (16) ein Kunststoff (26) mit einer Shore-A Härte gewählt wird, die mindestens um mehr als 5, vorzugsweise um mehr als 10 größer ist als die Shore-A Härte des für das Spritzgießen (40) des zweiten Schlauchelements (42) gewählten Kunststoffs (50).

10. Druckschlauch (12) mit
- einem rohrförmigen ersten spritzgegossenen Schlauchelement (16),
- einem als Schrumpfschlauch gestalteten Gewebeschlauch (30), der außen auf das erste Schlauchelement (16) aufgezogen und aufgeschrumpft ist sowie
- einem rohrförmigen zweiten Schlauchelement (42), das um das erste Schlauchelement (16) und den darüber gezogenen und geschrumpften Gewebeschlauch (30) spritzgegossen ist.

## Claims

1. Method (10) for producing a pressure hose (12) having the steps:
- injection moulding (14) of a tubular first hose element (16),
- mounting (28) of a fabric hose (30) on the outside of the first hose element (16),
- shrinking (32) of the fabric hose (30) on the first hose element (16) and
- injection moulding (40) of a tubular second hose element (42) around the first hose element (16) and the fabric hose (30) mounted thereabove.

2. Method according to Claim 1,
wherein the shrinking-on (32) of the fabric hose (30) is performed after the fabric hose (30) has been completely mounted on the outside of the first hose element (16).

3. Method according to Claim 1 or 2,
wherein on the injection moulding (14) of the first hose element (16) the first hose element (16) is produced longer at at least one of its ends than subsequently the second hose element (42), so that with the injection moulding (40) of the second hose element (42) a subsequently protruding hose section (38) of the first hose element (16) results.

4. Method according to Claim 3,
wherein on the injection moulding (40) of the second hose element (42) the protruding hose section (38) of the first hose element (16) is held stationary.

5. Method according to one of Claims 1 to 4,
wherein on the injection moulding (40) of the second hose element (42) the protruding hose section (38) of the first hose element (16) is clamped.

6. Method according to one of Claims 1 to 5,
wherein on the mounting (28) of the fabric hose (30) the fabric hose (30) is also mounted at least partially extending over the protruding hose section (38) of the first hose element (16).

7. Method according to one of Claims 1 to 6,
wherein the protruding hose section (38) of the first hose element (16) is removed before a use of the pressure hose (12) produced.

8. Method according to one of Claims 1 to 7,
wherein for the injection moulding (14) of the first hose element (16) a plastic (26) is selected with a hardness which is greater than the hardness of the plastic (50) selected for the injection moulding (40) of the second hose element (42).

9. Method according to Claim 8,
wherein for the injection moulding (14) of the first hose element (16) a plastic (26) is selected with a Shore A hardness which is greater at least by more than 5, preferably by more than 10, than the Shore A hardness of the plastic (50) selected for the injection moulding (40) of the second hose element (42).

10. Pressure hose (12) having
- a tubular first injection-moulded hose element (16),
- a fabric hose (30) designed as a shrink hose which is mounted and shrunk on the outside of the first hose element (16) and
- a tubular second hose element (42) which is injection-moulded around the first hose element (16) and the fabric hose (30) mounted thereabove and shrunk.

## Revendications

1. Procédé (10) de fabrication d'un tuyau flexible sous pression (12) avec les étapes suivantes :
- moulage par injection (14) d'un premier élément de tuyau flexible (16) en forme de tube ;
- emmanchement (28) d'un tuyau flexible en tissu (30) à l'extérieur sur le premier élément de tuyau flexible (16) ;
- rétractation (32) du tuyau flexible en tissu (30) sur le premier élément de tuyau flexible (16) ; et
- moulage par injection (40) d'un deuxième élément de tuyau flexible (42) en forme de tube autour du premier élément de tuyau flexible (16) et du tuyau flexible en tissu (30) emmanché dessus.

2. Procédé selon la revendication 1, dans lequel la rétractation (32) du tuyau flexible en tissu (30) est effectuée après l'emmanchement complet du tuyau flexible en tissu (30) à l'extérieur sur le premier élément de tuyau flexible (16).

3. Procédé selon la revendication 1 ou 2, dans lequel lors du moulage par injection (14) du premier élément de tuyau flexible (16), le premier élément de tuyau flexible (16) est fabriqué plus longuement au niveau d'au moins une de ses extrémités que le deuxième élément de tuyau flexible (42) suivant, de sorte qu'avec le moulage par injection (40) du deuxième élément de tuyau flexible (42), on obtient une section de tuyau flexible (38) ensuite en saillie du premier élément de tuyau flexible (16).

4. Procédé selon la revendication 3, dans lequel lors du moulage par injection (40) du deuxième élément de tuyau flexible (42), la section de tuyau flexible (38) en saillie du premier élément de tuyau flexible (16) est maintenue fixement sur place.

5. Procédé selon l'une quelconque des revendications 1 à 4, dans lequel lors du moulage par injection (40) du deuxième élément de tuyau flexible (42), la section de tuyau flexible (38) en saillie du premier élément de tuyau flexible (16) est coincée.

6. Procédé selon l'une quelconque des revendications 1 à 5, dans lequel lors de l'emmanchement (28) du tuyau flexible en tissu (30), le tuyau flexible en tissu (30) est emmanché également de façon à déborder au moins en partie au-delà de la section de tuyau flexible (38) en saillie du premier élément de tuyau flexible (16).

7. Procédé selon l'une quelconque des revendications 1 à 6, dans lequel la section de tuyau flexible (38) en saillie du premier élément de tuyau flexible (16) est retirée avant d'utiliser le tuyau flexible sous pression (12) fabriqué.

8. Procédé selon l'une quelconque des revendications 1 à 7, dans lequel une matière plastique (26) avec une certaine dureté est sélectionnée pour le moulage par injection (14) du premier élément de tuyau flexible (16), cette dureté étant supérieure à la dureté de la matière plastique (50) sélectionnée pour le moulage par injection (40) du deuxième élément de tuyau flexible (42).

9. Procédé selon la revendication 8, dans lequel une matière plastique (26) avec une certaine dureté Shore A est sélectionnée pour le moulage par injection (14) du premier élément de tuyau flexible (16), cette dureté étant au moins de 5 de plus, de préférence de 10 de plus que la dureté Shore A de la matière plastique (50) sélectionnée pour le moulage par injection (40) du deuxième élément de tuyau flexible (42).

10. Tuyau flexible sous pression (12) avec :
- un premier élément de tuyau flexible (16) en forme de tube moulé par injection ;
- un tuyau flexible en tissu (30) agencé comme un tuyau flexible rétractable emmanché à l'extérieur sur le premier élément de tuyau flexible (16) et rétracté sur lui ; et
- un deuxième élément de tuyau flexible (42) en forme de tube moulé par injection autour du premier élément de tuyau flexible (16) et du tuyau flexible en tissu (30) emmanché et rétracté dessus.
